(19) Europäisches Patentamt

European Patent Office

Office européen des brevets

(11) Publication number: **0 303 776 B1**

(12) EUROPEAN PATENT SPECIFICATION

(45) Date of publication of patent specification: **16.12.92**  (51) Int. Cl.⁵: **G01N 29/04**

(21) Application number: **88108061.8**

(22) Date of filing: **14.07.83**

(60) Publication number of the earlier application in accordance with Art.76 EPC: **0 151 115**

(54) Ultrasonic energy generator.

(43) Date of publication of application:
**22.02.89 Bulletin 89/08**

(45) Publication of the grant of the patent:
**16.12.92 Bulletin 92/51**

(84) Designated Contracting States:
**AT BE CH DE FR GB LI NL SE**

(56) References cited:
**US-A- 3 222 635      US-A- 3 264 864**
**US-A- 3 308 424      US-A- 3 508 433**
**US-A- 4 279 019      US-A- 4 391 142**

(73) Proprietor: **UE SYSTEMS, INC.**
**West Main Street**
**Elmsford New York 10523(US)**

(72) Inventor: **Goodman, Mark**
**1619 Third Avenue**
**New York, N.Y. 10023(US)**
Inventor: **Zeno, John Richard**
**221 W. 22nd Street**
**New York, N.Y. 10011(US)**
Inventor: **Borruso, Marty**
**1336 7st Street**
**Brooklyn, N.Y. 11218(US)**

(74) Representative: **Kehl, Günther, Dipl.-Phys. et al**
**Patentanwälte Hagemann & Kehl Ismaninger Strasse 108 Postfach 86 03 29**
**W-8000 München 86(DE)**

EP 0 303 776 B1

## Description

This invention relates to an ultrasonic energy generator, which is particularly suitable for detecting leaks in containers.

It is well known that ultrasonic generators and detectors can be used to locate leaks, e.g. in pipes. Such a system is shown in U.S. Patent No. 3,978,915 to Harris. In that arrangement ultrasonic generators are positioned in a chamber through which the pipes pass. At the ends of these pipes, exterior to the chamber, ultrasonic detectors are located. At the point where a leak occurs in the pipe or the pipe wall is thin, the ultrasonic energy will enter the pipe and travel along the pipe to the end where the detector resides. Thus the detector will receive a signal indicating the existence of this leak or weak spot. Since ultrasonic energy used for such purposes is generally in the range of 40 KHz, it is too high in frequency to be heard by a human being. Thus, means are provided for heterodyning or frequency shifting the detected signal into the audio range and various schemes are available for doing this.

By locating an ultrasonic generator in a closed chamber, a standing wave pattern with peaks and nodes, is established. If a node occurs at the position of a leak or weak spot, no ultrasonic energy will escape and the defect will not be detected.

US-A-3,508,433 discloses a pipeline leak detector using the ultrasonic characteristics of typical leaks, which eliminates background noise by filtering out the audio frequency noise. The ultrasonic spectrum of the leak is electrically demodulated to provide a DC-signal proportional to the noise level rather than the noise itself. Means are provided for detecting predetermined ranges of the ultrasonic frequency spectrum and beating a variable frequency oscillator frequency thereagainst to produce a difference frequency in the audio range for subsequent demodulation. In case of occuring of standing wave patterns with peaks and nodes, it may occur that a position of a leak or a weak spot will not be detected, if a node occurs in the region of the leak or the weak spot. Further the electronic evaluation circuit of the known device may incorrectly generate an alarm signal, if some of the carrier wave generated by a sweep oscillator will leak through due to temperature and voltage variations.

US-A-3,308,424 discloses an apparatus including an ultrasonic transducer for receiving ultrasonic vibrations and converting them into an electric signal. Circuit means are provided for converting the signal into audible sound so that the ultrasonic vibration can be heard by an operator. The apparatus provided can reach areas of difficult accessibility and monitors extensive regions quickly for ultrasonic vibrations.

## Summary of the Invention

The present invention is directed to providing an ultrasonic energy generator avoiding the production of constant standing waves. This object is achieved by designing the ultrasonic generator to have a variable frequency output, as disclosed in claim 1.

In an illustrative embodiment of the invention the ultrasonic frequency generator typically includes a transducer crystal set for the frequency of interest. This crystal is in the feedback loop of an amplifier which drives it such that oscillations at the resonant frequency of the crystal are established. The frequency is varied about the selected frequency so as to avoid standing wave nodes at the location of a leak. This is accomplished by applying a ramp signal to the biasing network of the active element in the oscillator. This ramp signal is generated by a conventional RC circuit which has an LED flasher circuit connected across the capacitor element of that circuit.

The shift of the ultrasonic frequency into the audible range, so that a user may hear it or a meter may display it, can be accomplished with an integrated circuit function generator arranged to provide AM suppressed carrier operation. When such an integrated circuit is biased to the middle of its range, the carrier signal it is intended to produce, i.e. a signal slightly different than the received ultrasonic signal, will be suppressed. By adding the ultrasonic signal to the biasing level for this circuit the output will be only the sum and difference signals between the ultrasonic input and the carrier generated by the circuit. The sum signal is filtered out and the difference signal is used to drive headphones with which one can listen for leaks, or a meter by which to indicate them. The bias for establishing the suppressed carrier operation is under the control of a feedback loop which senses when carrier signal is present in the output signal, integrates the sensed carrier signal over a period of time to arrive at an average value, and uses the average value to vary the bias such that the carrier signal is eliminated.

## Brief Description of the Drawings

The foregoing and other features of the present invention will be more readily apparent from the following detailed description and drawings of an illustrated embodiment of the invention in which:

Fig. 1 is a diagram illustrating the overall circuit arrangement and its use in connection with the detection of a leak;

Fig. 2 is a schematic diagram of the ultrasonic generator shown in Fig. 1; and

Fig. 3 is a schematic diagram of the transducer and preamplifier shown in Fig. 1.

Description of an Exemplary Embodiment

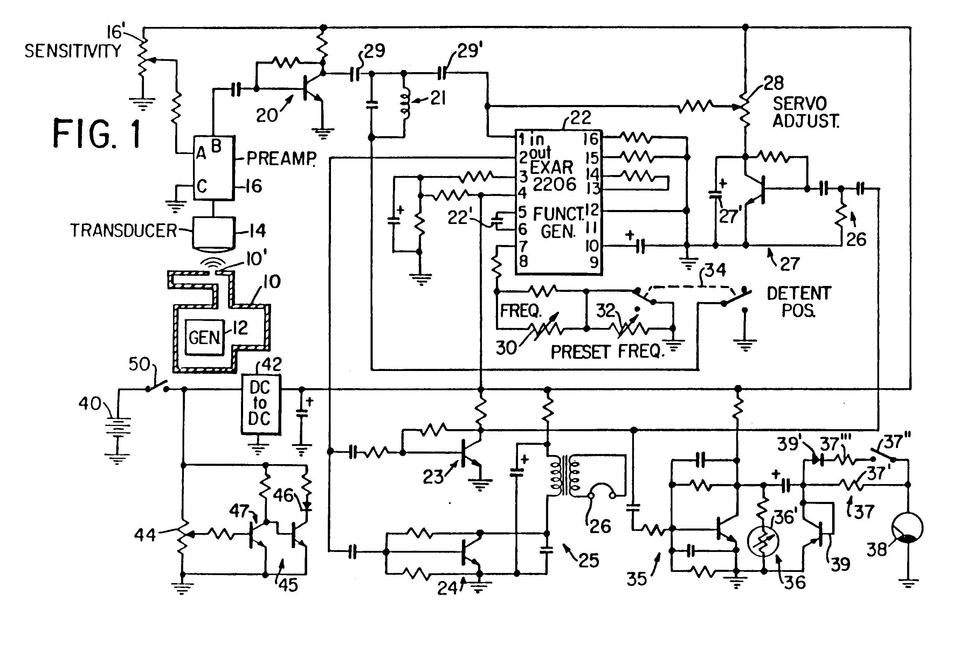

Fig. 1 represents a block diagram of an apparatus and method for ultrasonically detecting mechanical faults, for example bearing failures and leaks in containers. By way of example, a container 10 is illustrated. Located within the container is an ultrasonic generator 12 which produces ultrasonic sound waves in the vicinity of, e.g., 40 KHz. According to the present invention this generator produces an output which is frequency modulated about its 40 KHz center frequency at a much lower frequency, for example 5-20 Hz. By means of this variation in the output of the generator, the standing wave pattern created within the container varies such that the standing wave nodes do not remain constant at one position.

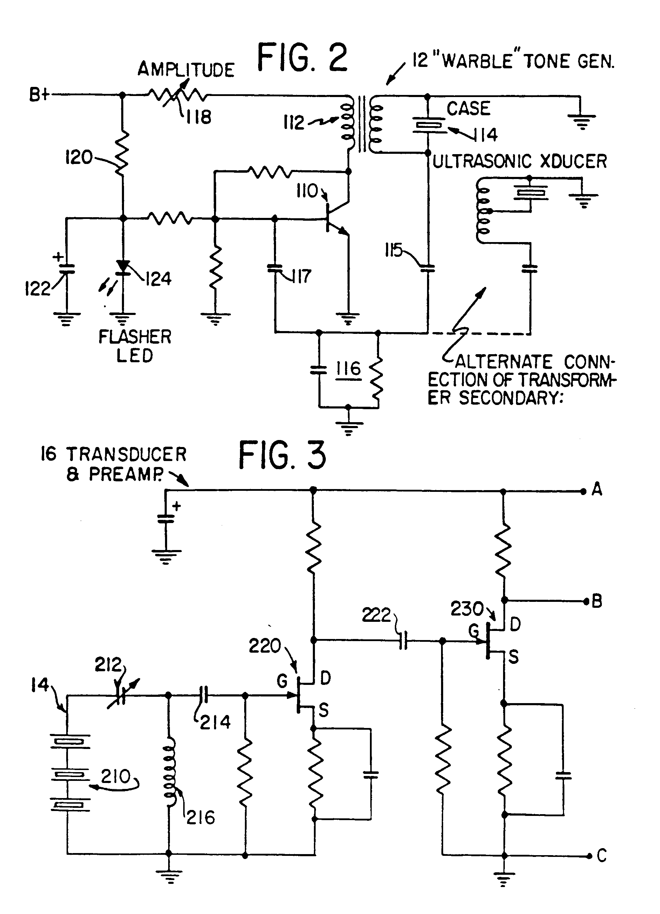

At position 10' there is a small hole in the container 10 from which ultrasonic energy may escape and be detected by an ultrasonic transducer 14. The output of the transducer 14 is applied to a field-effect transistor preamplifier 16 whose gain is under the control of sensitivity control 16' which varies the supply voltage to the preamplifier as shown in Fig. 3.

From the preamplifier 16 the ultrasonic signal is delivered to a transistor driver amplifier 20 which amplifies it again and in turn capacitively couples it to the input (pin 1) of a function generator 22 via capacitors 29, 29'. The generator 22 acts to frequency shift the amplified ultrasonic signal into the audible frequency range. This audio signal from the output (pin 2) of circuit 22 is applied to a headphone transistor amplifier 24 which may include a Darlington transistor arrangement as indicated by the letter D on the drawing. From the amplifier 24 it passes via a filter and transformer 25 to a set of headphones 26. The filter acts to eliminate the carrier and any extraneous frequencies, e.g. the sum signal, from the signal applied to the headphones. Circuit 22 also has its output applied through a transistor driver amplifier 23 to a frequency-compensated meter amplifier circuit 35. Filter elements in circuit 35 also act to cancel the carrier signal and any extraneous signal, leaving only the audio signal. Following the amplifier 35 there is a temperature compensation circuit 36 and a meter signal conditioning circuit 37 whose output is applied to a meter 38. Circuit 37 acts to put the signal in proper condition for display by the meter 38.

Temperature compensation circuit 36 includes a thermistor 36' which is part of a voltage divider network leading to the meter signal condition circuit 37. As a result, an increase in temperature will cause the proportion of voltage applied to the meter circuit to be changed in such a way as to compensate for the change in gains due to the temperature increase.

In meter signal condition circuit 37 there are two diodes, one in the form of a germanium transistor 39 which is wired as a diode. The effect of this diode is to rectify the AC signal received so as to generate a DC signal for application to the meter. This DC signal is ordinarily applied through resistor 37' to the meter. When the meter is to be operated in a logarithmic mode, a switch 37" is closed, placing a diode 39' and resistor 37''' across resistor 37'. Resistor 37''' is signficantly smaller than resistor 37' and thus changes the scale for the meter. In addition the diode 39' in series with resistor 37''' acts to create a voltage threshold which eliminates noise in the circuit when it is in the more sensitive logarithmic scale.

As a result of the arrangement of Fig. 1, ultrasonic signals leaking from container 10 are picked up by transducer 14, amplifier and frequency shifted so that a user will have an indication of the existence of a leak through the sound heard in headphones 26 and level displayed on meter 38.

The actual frequency shift of the ultrasonic signal is accomplished in function generator 22. This generator may be a commercially-available integrated circuit, such as the EXAR 2206, which has been wired to produce sine wave outputs at a frequency determined by tuning resistor 30 connected to pin 7 of the circuit as well as capacitor 22' connected between pins 5 and 6. One characteristic of this circuit is that a particular bias applied to its input (pin 1) will cause it to produce an amplitude-modulated (AM), suppressed-carrier output. The bias to obtain this suppressed-carrier modulation is derived from variable resistor 28. If capacitor 22' and resistor 30 are selected to produce a carrier signal that differs from the ultrasonic signal by a frequency in the audio band, the output of circuit 22 will be an audio signal related to the input ultrasonic signal and a much higher signal. In particular the output signal will be equivalent to the sum and difference frequencies of the ultrasonic signal and the carrier signal generated by circuit 22, but the carrier signal itself will not be present in the output. If, for example, resistance 30 is set so that circuit 22 generates a 42 KHz signal and the ultrasonic signal applied through capacitors 29 and 29' to circuit 22 is at 40 KHz, the output will be at 2 KHz and at 82 KHz. Since only the audio band signal is desired, filter circuits 25 and 35 are designed to eliminate the 82 KHz sum signal.

Although a proper bias on the input to circuit 22 will eliminate or suppress the carrier generated by that circuit, it has been found that this adjustment is critical and some carrier may leak through due to temperature and voltage variations. Also as the carrier frequency is changed due to changes in the setting of resistor 30 there are changes in the circuit operation that may cause the carrier to appear in the output unless there is an adjustment of the bias. In order to provide this adjustment a servo or feedback network is provided. In particular the output of circuit 22 (pin 2) is applied through driver circuit 23 to a highpass filter 26 which passes only frequencies above 20 KHz. The output of filter 26 is applied to a Darlington transistor arrangement that forms amplifier 27. Amplifier 27 acts to amplify and integrate or average, via capacitor 27', the carrier signal received. This signal is also inverted in the amplifier so as to vary the bias from resistor 28 in such a way as to correct for the presence of the carrier in the output signal. Although some carrier may always exist, sufficient to create an error signal, this level will be low enough to avoid erroneous indications in the earphones 26 and the meter 38.

In one embodiment the transducer is used to detect vibrations, for example from bearings, through a direct mechanical connection between the noise source, e.g., the bearing housings, and the transducer crystals. In such a case the bandwidth of signals detected may range from 20 KHz to 100 KHz, and particular bands of this frequency range may be selected by changing the position of variable resistor 30 so as to create a carrier frequency in circuit 22 which moves over this range.

In another embodiment the transducer is located in space at some distance from a hole in a container that has 40 KHz generator 12 within it. In such a case the preferred 40 KHz mode of operation of the detector is used.

When operating in this acoustic pick-up mode where the transducer is held in space, the main tuning resistance 30 is rotated to a detent at one end. Near this detent the resistance of main tuning resistor 30 drops to near zero. Upon entering the detent, a switch 34 changes position, thereby connecting preset resistor 32 into the frequency control line for circuit 22 and enabling a 40 KHz resonant filter 21. The resonant filter 21 acts to boost frequencies in the 40 KHz range and to eliminate those substantially outside this band of frequencies. Resistor 32 acts to set the frequency of circuit 22 at some value in the vicinity of 40 KHz, e.g. 42 KHz.

Power for the circuit of Fig. 1 is created by a battery 40 which is applied through power switch 50 to a DC-to-DC converter 42 that generates a 15 volt output applied to the various parts of the circuit. Positioned across the battery input to the DC-to-DC converter is a recharging indicator circuit which includes elements 44-47. When the power switch 50 is closed, the voltage from battery 40 applies bias to transistors 45 and 47, which are Darlington transistor arrangements. Variable resistor 44 is set such that transistor 47 is turned on, thereby turning transistor 45 off. When the battery voltage drops, however, the bias on the base of transistor 47 becomes insufficient to cause it to remain in the conduction state. As it turns off, it causes transistor 45 to turn on, which causes current to be drawn through light emitting diode 46. This diode indicates when the battery must be recharged. It has been found that through the use of cascaded arrangements of Darlington transistors, such as transistors 45 and 47, the circuit has a sharp response so that a particular level of degradation in the amplitude of the battery voltage can be set by variable resistance 47 and it will be accurately indicated.

Now that the details of the receiver and frequency conversion circuits have been desribed, reference will be made to the ultrasonic generator 12, the details of which are shown in Fig. 2. This generator is typically set to produce an output ultrasonic signal at approximately 40 KHz. To accomplish this a 40 KHz crystal transducer 114, such as that made by Panasonic Corp., is employed in the feedback circuit of an oscillator which includes transistor 110. When the circuit is turned on, current initially flows from the power supply through an amplitude control resistance 118 and the primary of a step-up transformer 112 to transistor 110. This creates a voltage level across the crystal transducer 114 which will begin to resonate at its fundamental frequency of 40 KHz. The resonant frequency from transducer 114 is passed to the base of transistor 110 through a filter network comprising capacitor 115, a parallel combination 116 of a capacitor and resistor, and capacitor 117. This filter network passes signals in the 40 KHz range and eliminates harmonics. Inversion of the feedback signal in order to have the positive feedback needed for oscillation is by means of the wiring of the secondary of transformer 112 which is connected across transducer 114. With this arrangement the crystal will be driven at its resonant frequency of 40 KHz and will produce an ultrasonic wave at that frequency.

If the generator is located within a container, such as container 10 shown in Fig. 1, the ultrasonic energy produced by the crystal will fill the container and will leak out of the container at openings, such as hole 10'. When in a container, however, a constant output from transducer 114 will result in the establishment of standing waves in the container. Thus it is possible that a null of standing wave will occur at the position of the leak 10', which would result in failure to detect the leak. To compensate for this, generator 12 causes the standing wave pattern to vary slowly by varying its output frequency. This is accomplished by means of resistor 120, capacitor 122 and flasher light-emitting diode 124, e.g., a Litronix Flasher Mod. FRL-4403. With this arrangement current flows through resistor 120 and charges up capacitor 122. As it charges it changes the bias on transistor 110, which results in a frequency shift in the oscillator of perhaps 2-5 KHz. When the breakdown voltage of the flasher 124 is reached it will discharge the voltage across capacitor 122 and the process will repeat. Typically the resistance 120 and capacitor 122 are selected so that the variation in frequency occurs at a sub-audio rate, e.g. 5-20 Hz. However, any convenient frequency variation can be selected.

The circuit of Fig. 2 can be altered by replacing the flasher LED with some other type of voltage breakdown device. Also, the secondary of transformer 112 can be wired as shown in Fig. 2 so there is no voltage step-up. This arrangement lowers the impedance across the crystal, thereby lowering its Q and increasing the frequency variation achieved.

By varying the frequency output at a slow rate, not only is the problem of node points avoided, it is psychologically easier for a listener to detect leaks. In addition the receiver circuit could be modified so as to respond only to this varying frequency, thus making it more sensitive and improving its signal-to-noise ratio.

The transducer and preamplifier which detect the signal produced by the generator of Fig. 2 are shown in the schematic of Fig. 3. In Fig. 3 a group of series-connected ultrasonic transducers are shown for receiving ultrasonic energy and converting it not electrical energy. Each transducer may be a 40 KHz piezoelectric crystal, such as those manufactured by Panasonic Corporation. While three such crystals are shown in Fig. 3, the number of such crystals is not critical and two, or more than three, may be employed. By arranging these transducer adjacent to each other in one plane, each receives acoustic energy and the electrical signals created thereby are added because of the series connection, thereby giving a larger output than when a single transducer is used. The effectiveness of such an arrangement of transducers could be reduced if the impedance of the preamplifier is low. To avoid this a field-effect transistor preamplifier is used with an input stage field-effect transistor 220. The output of this transistor is applied through capacitor 222 to field-effect transistor 230. The drain of transistor 230 is the output of the preamplifier that is connected to driver circuit 20 shown in Fig. 1. As explained previously, the receiver can be used in a mode which allows it to scan ultrasonic frequencies from 20 KHz to 100 KHz or it can be used in a preferred 40 KHz band. When used in the preferred 40 KHz band, capacitors 212 and 214 as well as inductance 216, are used to create a resonant circuit with a frequency response centered about 40 KHz. This will increase the size of the voltage at 40 KHz up to 40 times and will greatly attenuate frequencies removed from this center band. When this resonant circuit is used it is important that transistor 220 be a MOSFET.

The gain of the preamplifier is controlled by variable resistance 16$'$ shown in Fig. 1. The voltage derived from the variable resistance is applied to the drains of transistors 220, 230 through respective resistances. Because the output level is achieved in this manner, i.e. with the amplitude control being outside the signal path, any scratchiness in resistor 16$'$ will not be heard in the microphones 38. In addition, any overload in the preamplifier is easily compensated by reducing the voltage level to the circuit.

The transducers 210, regardless of how many are used, are serially-wired together and are spaced close together, preferably in a flat plane. Having these transducers arranged next to each other on a flat plane effectively focuses the overall transducer at infinity. If desired, the transducers could be located on a curved or parabolic surface such that they would be focused to receive energy originating from a source at any distance closer than infinity. However, in most cases this is not necessary.

**Claims**

1. An ultrasonic energy generator for use in detection of leaks in containers, said generator comprising:

   an oscillator circuit means for producing an electrical oscillation in a narrow ultrasonic band of frequencies, said oscillator circuit including a feedback path with a piezoelectric crystal (114), said crystal having a resonant frequency in said narrow band of frequencies and converting the electrical oscillation signals in the feedback path into ultrasonic energy, and sweep means (122, 124) for causing the output frequency of said oscillator circuit means to constantly vary within said narrow band of frequencies at a periodic frequency rate that is no higher than the upper limit of the audio range.

2. Apparatus as claimed in claim 1 wherein said oscillator circuit means is a transistor oscillator with at least one transistor (110) and said sweep means is a means (122, 124) for periodically varying the bias applied to said transistor (110).

3. Apparatus as claimed in claim 2 wherein said sweep means comprises a capacitance (122) charged from a voltage source through a resistance, and a threshold voltage level conduction device connected across said capacitance, said conduction device (124) having a low impedance when the voltage across it is greater than a particular level and a high impedance when the voltage is below the particular level, the values of the resistance, capacitance and particular level being related so that the bias voltage builds up from a first level to a second level at one rate and then returns to the first level at a different rate when the particular level is exceeded and the capacitance is discharged through the conduction device, said buildup and return occuring at the periodic frequency rate.

4. Apparatus as claimed in claim 3 wherein the periodic frequency rate is in the range from 5 to 20 Hz.

**Patentansprüche**

1. Ultraschallgenerator zum Feststellen von Leckstellen in Behältern, welcher Generator folgendes aufweist:

eine Oszillatorschaltung zum Erzeugen einer elektrischen Oszillation in einem schmalen Ultraschallfrequenzband, welche Oszillatorschaltung eine Rückkopplungsschleife mit einem piezoelektrischen Kristall (114) aufweist, der eine in dem schmalen Ultraschallfrequenzband gelegene Resonanzfrequenz aufweist und die elektrischen Oszillationssignale in der Rückkoppelungsschleife in Ultraschallenergie verwandelt, und Abtastmittel (122, 124), durch die die Ausgangsfrequenz der Oszillatorschaltung kontinuierlich innerhalb des schmalen Frequenzbandes mit einer periodischen Wiederholfrequenzrate variert wird, die nicht höher als da obere Grenze des Hörfrequenzbereiches ist.

2. Vorrichtung nach Anspruch 1, bei der die Oszillatorschaltung ein Transistoroszillator mit mindestens einem Transistor (110) ist, und bei der die Abtastmittel Mittel (122, 124) sind, die die an den Transistor (110) angelegte Vorspannung periodisch ändern.

3. Vorrichtung nach Anspruch 2, bei dar die Abtastmittel einen Kondensator (122) aufweisen, der von einer Spannungsquelle über einen Widerstand geladen wird, wobei eine Schalteinrichtung mit Schwellenspannungsauslösung parallel zu dem Widerstand geschaltet ist, welche Schalteinrichtung (124) eine geringe Impedanz aufweist, wenn die an ihr anliegende Spannung höher als ein bestimmter Pegel ist und eine hohe Impedanz aufweist, wenn die an ihr anliegende Spannung niedriger als ein bestimmtes Pegel ist, wobei die Werte des Widerstandes, des Kondensators und des bestimmter Pegels so abgestimmt sind, daß sich die Vorspannung von einem ersten Pegel zu einem zweiten Pegel mit einer ersten Geschwindigkeit aufbaut und dann auf den ersten Pegel mit einer anderen Geschwindigkeit zurückkehrt, sobald der bestimmte Pegel überschritten ist und der Kondensator über die Schalteinrichtung entladen wird, wobei ferner das Aufbauen und Zurückkehren mit der Wiederholfrequenzrate erfolgt.

4. Vorrichtung nach Anspruch 3, bei der die periodische Wiederholfrequenzrate im Bereich von 5 bei 20 Hz liegt.

**Revendications**

1. Générateur d'énergie ultrasonore pour utilisation à la détection de fuites dans des conteneurs, ledit générateur comprenant :

un moyen de circuit oscillateur pour produire une oscillation électrique dans une bande de fréquences ultrasonores étroite, ledit circuit oscillateur comprenant un trajet de contre-réaction avec un cristal piézo-électrique (114), ledit cristal ayant une fréquence de résonnance dans ladite bande de fréquences étroite et convertissant les signaux d'oscillation électrique, dans le trajet de contre-réaction, en énergie ultrasonore, et un moyen de balayage (122, 124) pour faire en sorte que la fréquence de sortie dudit moyen de circuit oscillateur varie constamment, à l'intérieur de ladite bande de fréquences étroite, à une valeur de fréquence périodique qui n'est pas plus élevée que la limite supérieure de la plage audible.

2. Appareil tel que revendiqué dans la revendication 1, dans lequel ledit moyen de circuit oscillateur est un oscillateur à transistor avec au moins un transistor (110) et dans lequel ledit moyen de balayage est un moyen (122, 124) pour faire varier de façon périodique la polarisation appliquée audit transistor (110).

3. Appareil tel que revendiqué dans la revendication 2, dans lequel ledit moyen de balayage comprend une capacité (122) chargée à partir d'une source de tension à travers une résistance, un dispositif de conduction à niveau de tension de seuil connecté aux bornes de ladite capacitance, ledit dispositif de conduction (124) ayant une impédance faible lorsque la tension à ses bornes est plus grande qu'un niveau donné et une impédance élevée lorsque la tension est au-dessous du niveau donné, les valeurs de la résistance, de la capacité et du niveau donné étant liés de manière à ce que la tension de polarisation monte, d'un premier niveau à un second niveau, à une certaine vitesse et retourne au premier niveau à une vitesse différente lorsque le niveau donné est dépassé et que la capacité est déchargée dans le dispositif de conduction, ladite montée et ledit retour se produisant à une valeur de fréquence périodique.

4. Appareil tel que revendiqué dans la revendication 3, dans lequel ladite valeur de fréquence périodique est dans la plage allant de 5 à 20 Hz.

**FIG. 1**

SENSITIVITY

TRANSDUCER

PREAMP.

SERVO ADJUST.

DETENT POS.

PRESET FREQ.

FREQ.

EXAR 2206
FUNCT. GEN.

DC to DC

# FIG. 2

AMPLITUDE

12 "WARBLE" TONE GEN.

B+

118
120
122
124
FLASHER LED
110
117
112
115
116
CASE
114
ULTRASONIC XDUCER
ALTERNATE CONNECTION OF TRANSFORMER SECONDARY:

# FIG. 3

16 TRANSDUCER & PREAMP.

14
212
210
214
216
220
222
230
A
B
C
G D S
G D S